# EUROPÄISCHE PATENTSCHRIFT

(11) **EP 2 447 037 B1**
(45) Veröffentlichungstag und Bekanntmachung des Hinweises auf die Patenterteilung: **22.01.2020**
(21) Anmeldenummer: 11186632.3
(22) Anmeldetag: 26.10.2011
(51) Int. Cl.: B29C 49/64, B29C 49/68, B29C 49/78, B29C 49/42, B29C 49/06, B29C 49/46

(54) **Vorrichtung zum Konditionieren von Kunststoffvorformlingen und Verfahren zum Herstellen von Kunststoffbehältnissen**
Device for conditioning plastic preforms and method for manufacturing plastic containers
Dispositif pour conditionner préformes en plastique et procédé de fabrication de récipients en plastique

(30) Priorität: 26.10.2010 DE 102010049404
(43) Veröffentlichungstag der Anmeldung: 02.05.2012
(73) Patentinhaber: Krones AG, 93073 Neutraubling (DE)
(72) Erfinder: Senn, Konrad, 93073 Neutraubling (DE); Wickenhöfer, Florian, 93073 Neutraubling (DE); Lappe, Ulrich, 93073 Neutraubling (DE)
(74) Vertreter: Bittner, Bernhard

(56) Entgegenhaltungen:
- EP-A2- 2 447 037
- WO-A2-2008/154503
- DE-A1- 3 908 219
- FR-A1- 2 182 010
- US-A- 5 718 853
- US-B1- 6 422 379

## Beschreibung

Die vorliegende Erfindung bezieht sich auf eine Vorrichtung und ein Verfahren zum Herstellen von Kunststoffbehältnissen. Derartige Vorrichtungen und Verfahren sind aus dem Stand der Technik seit langem bekannt. Dabei werden üblicherweise Kunststoffvorformlinge zunächst in einem Ofen erwärmt und anschließend mittels einer Blaseinrichtung, wie beispielsweise einer Streckblasmaschine zu Kunststoffbehältnissen umgeformt. Probleme treten beispielsweise dann auf, wenn in einem der Umformungseinrichtung nach geordneten Aggregat, wie beispielsweise einer Etikettiermaschine, Probleme auftreten und der Umformungsvorgang unterbrochen werden muss. Eine Unterbrechung des Transportes der Kunststoffvorformlinge durch die Heizeinrichtung kann nämlich dazu führen, dass einzelne Kunststoffvorformlinge überhitzt und auf diese Weise zerstört werden. Auch können einmal in der Heizeinrichtung erwärmte Kunststoffvorformlinge nicht wieder abgekühlt und ein weiteres Mal erwärmt werden sondern diese Kunststoffvorformlinge sind Ausschuss.

Aus der EP 0 736 367 B1 und aus der US 5,718,853 ist eine Vorbehandlung von Kunststoffvorformlingen vor einem Blasformvorgang gemäß den Oberbegriffen der Ansprüche 1 und 10 bekannt. Dabei ist eine Vorkonditionierungseinheit vorgesehen, welche von den Kunststoffvorformlingen durchlaufen wird und welche derart gestaltet ist, dass in jeden Kunststoffvorformling genau die gleiche Wärme eingebracht wird. Bei dem Transport werden dabei die Kunststoffvorformlinge jeweils in Dreiergruppen auf Transporteinheiten verbracht und mit diesen Transporteinheiten durch die Vorkonditionierungseinheit transportiert. Auf diese Weise kann in sehr kurzer Zeit erreicht werden, dass die Kunststoffvorformlinge eine im Wesentlichen gleiche Temperatur aufweisen.

Allerdings ist die in der EP 0 736 367 B1 beschriebene Vorrichtung technisch relativ kompliziert und insbesondere das Transportsystem relativ aufwendig.

Die DE 10 2008 014 215 A1 beschreibt eine Vorrichtung zum Erwärmen von Kunststoffvorformlingen. Dabei werden die Kunststoffvorformlinge zunächst vorgewärmt um anschließend mit einer Mirkowellenerwärmungseinrichtung energieeffizienter weiter erwärmt zu werden.

Aus der DE 30 20 150 C2 ist ein Magazin für Vorformlinge bekannt. Dieses Magazin weist ein geschlossenes Gehäuse mit senkrechten Seitenwänden auf, und Öffnungen zum Einleiten von mittels einer Temperaturregeleinrichtung auf konstanter Temperatur gehaltener Heißluft zum Vorwärmen der Kunststoffvorformlinge in einer Heizzone des Magazins.

Der vorliegenden Erfindung liegt die Aufgabe zugrunde, eine Möglichkeit zur Konditionierung von Kunststoffvorformlingen zur Verfügung zu stellen, die auch bei unterschiedlichsten Ausgangstemperaturen der Kunststoffvorformlinge eine einheitliche Erwärmung bzw. Konditionierung derselben erlaubt.

Weiterhin soll es möglich sein, diese Konditionierung unabhängig davon zu erreichen, ob die Kunststoffvorformlinge ausgehend von einer Herstellungseinrichtung zu der Konditionierungseinrichtung gelangen oder ausgehend von sehr niedrigen oder sehr unterschiedlichen Ausgangstemperaturen.
Dies wird erfindungsgemäß durch eine Vorrichtung und ein Verfahren nach den unabhängigen Ansprüchen erreicht. Vorteilhafte Ausführungsformen und Weiterbildungen sind Gegenstand der Unteransprüche.

Eine erfindungsgemäße Vorrichtung zum Konditionieren, insbesondere zum thermischen Konditionieren von Kunststoffvorformlingen weist einen Temperierraum zur Aufnahme einer Vielzahl von Kunststoffvorformlingen auf sowie eine Zuführeinrichtung, um dem Temperierraum die Kunststoffvorformlinge zu zuführen. Weiterhin weist die Vorrichtung eine Abführeinrichtung auf, um die Kunststoffvorformlinge aus dem Temperierraum auszuführen sowie eine Transporteinrichtung, welche die Kunststoffvorformlinge von der Zuführeinrichtung zu der Abführeinrichtung derart transportiert, dass jeder Kunststoffvorformling während einer vorgegebenen Verweildauer in dem Temperierraum verbleibt.

Erfindungsgemäß ist eine Temperatur der aus der Abführeinrichtung austretenden Kunststoffvorformlinge unabhängig von einer Verweildauer der Kunststoffvorformlinge in dem Temperierraum im Wesentlichen konstant und die Transporteinrichtung ist derart gestaltet, dass jeder Kunststoffvorformling während einer Zeitspanne von wenigstens 5 Minuten in dem Temperierraum verbleibt.

Während in der oben erwähnten EP 0 736 367 B1 darauf hingewiesen wird, dass die Kunststoffvorformlinge lediglich über eine relativ kurze Zeitspanne wie eineinhalb bis zwei Minuten konditioniert werden, wird im Rahmen der vorliegenden Erfindung vorgeschlagen, diese Zeitspanne auf wenigstens 5 Minuten auszudehnen. Vorteilhaft verbleiben die Kunststoffvorformlinge während einer Zeitspanne von wenigstens 7 Minuten besonders bevorzugt von wenigstens 10 Minuten, besonders bevorzugt von wenigstens 12 Minuten und besonders bevorzugt von wenigstens 15 Minuten innerhalb des Temperierraums.

Durch diese im Vergleich zum Stand der Technik erheblich vergrößerte Zeitspanne wird erreicht, dass die aus der Vorrichtung austretenden Vorformlinge jeweils die gleiche Temperatur aufweisen, unabhängig davon, wie lange sie im Einzelnen innerhalb des Temperierraums verblieben sind und auch, mit welcher Eingangstemperatur sie dem Temperierraum zugeführt wurden. Dies gilt selbst dann, wenn die Ausgangstemperaturen sich erheblich unterscheiden. Weiterhin ist es auf diese Weise möglich, die Vorrichtung zum Konditionieren auch als Puffer für die Kunststoffvorformlinge zu verwenden, da auch bei erheblich größeren Zeitspannen der Verweildauer keine weitere Beschädigung der Kunststoffvorformlinge auftritt.

Damit erlaubt bevorzugt die hier beschriebene Vorrichtung zum Konditionieren auch eine Kopplung einer Spritzgussmaschine zum Herstellen von Kunststoffvorformlingen mit einer Streckblasmaschine, wobei hierzu die erfindungsgemäße Vorrichtung vier Aufgaben erfüllt, nämlich einerseits eine Überbrückung des Weges zwischen der Spritzgussmaschine und der Streckblasmaschine, weiterhin eine Entzerrung von getaktetem auf kontinuierlichen Lauf, weiterhin eine Energie- bzw. Wärmeniveauerhaltung und schließlich auch eine mögliche Entkopplung bei Störung einer der beiden Maschinen.

Dazu weist die hier oben erwähnte erfindungsgemäße Vorrichtung vorteilhaft ein temperiertes Fördersystem bzw. eine Transporteinrichtung auf, welches besonders bevorzugt über eine Vereinzelung und eine Zuführrinne verfügt. Über die Zuführeinrichtung können diese Kunststoffvorformlinge zugeführt werden und über die Abführeinrichtung die temperierten Kunststoffvorformlinge abgeführt werden.

Daneben kann auch eine Rückführeinheit vorgesehen sein, welche überschüssige Kunststoffvorformlinge beispielsweise wieder in einen Einlauf zurückführt. Damit ist, wie oben erwähnt, das System so ausgelegt, dass die Kunststoffvorformlinge eine hohe Verweildauer im Temperierraum bzw. im Temperierbereich aufweisen, der bei mindestens 5 Minuten, bevorzugt bei mindestens 6 Minuten, bevorzugt bei mindestens 8 Minuten und besonders bevorzugt bei mindestens 10 bis 15 Minuten im konstanten Betrieb liegt, wobei die Verweildauer auch von einem Abmaß und/oder einem Durchsatz des Temperierbereichs abhängig sein kann. Dies hat zur Folge, dass unabhängig von der Temperatur, mit der die Kunststoffvorformlinge im Temperierraum ankommen und egal, wie lange sie sich in ihm befinden, mit immer annähernd derselben Temperatur ausgegeben werden können und damit auch immer mit derselben Temperatur in eine nach geordnete Blasmaschine einlaufen.

Die Abweichung von der Solltemperatur hängt dabei von der Verweildauer und der Strömungsgeschwindigkeit im Temperierraum ab, sowie weiterhin der Einlauf- und Auslauftemperatur. Die Vorrichtung ist (insbesondere hinsichtlich Abmessung und Fördergeschwindigkeit der Transporteinrichtung) so ausgelegt, dass die Verweildauer mindestens solange ist, dass selbst bei einer starken Schwankung der Einlauftemperatur nur eine kleine Abweichung am Auslauf besteht. Ideal wäre eine Abweichung im Bereich von +/- 0 Grad, dies würde aber theoretisch einen unendlich langen Aufenthalt im Temperierraum nach sich ziehen.

Für eine Abweichung von +/- 2 Grad wird, je nach Randbedingungen, eine Verweildauer von 10 bis 25 Minuten benötigt (hierbei wurde ein Heißluftdurchsatz von mindestens 500m³/h vorzugsweise zwischen 800 - 2000m³/h zugrunde gelegt sowie eine möglichst hohe Strömungsgeschwindigkeit (der erwärmenden bzw. temperierenden Luft) von bis zu 15m/s.

Die
Temperatur der aus der Abführeinrichtung austretenden Kunststoffvorformlinge ist im Wesentlichen unabhängig von einer Temperatur der über die Zuführeinrichtung dem Temperierraum zugeführten Kunststoffvorformlinge. Auch dies wird, wie oben erwähnt, über die vergleichsweise lange Verweildauer der Kunststoffvorformlinge erreicht. Unter im Wesentlichen unabhängig wird dabei verstanden, dass die Temperaturen der einzelnen Kunststoffvorformlinge sich um nicht mehr als 6K, bevorzugt um nicht mehr als 5K, bevorzugt um nicht mehr als 4K, bevorzugt um nicht mehr als 3K und besonders bevorzugt um nicht mehr als 2K voneinander unterscheiden.

Die Transporteinrichtung transportiert die Kunststoffvorformlinge wenigstens abschnittsweise unsortiert durch den Temperierraum.

Hierunter wird verstanden, dass die Kunststoffvorformlinge beispielsweise in einer losen Schüttung durch den Temperierraum gefördert werden. Bevorzugt erfolgt der Transport jedoch derart, dass die Längsrichtungen der unsortiert transportierten Kunststoffvorformlinge in mehr als einer Richtung ausgerichtet und bevorzugt im Wesentlichen statistisch verteilt sind. Hierdurch wird eine starke Vereinfachung der Vorrichtung erreicht und zusätzlich kann die Vorrichtung so auch als Pufferspeicher für die Kunststoffvorformlinge dienen.

Bei einer weiteren vorteilhaften Ausführungsform weist die Vorrichtung eine Strömungserzeugseinrichtung auf, welche im Temperierraum eine Luftströmung erzeugt, mit der die Kunststoffvorformlinge beaufschlagbar sind. Bei dieser Strömungserzeugungseinrichtung kann es sich beispielsweise um Ventilatoren und dergleichen handeln, welche eine gerichtete Strömung der Luft bzw. allgemein eines gasförmigen Mediums innerhalb der erfindungsgemäßen Vorrichtung erzeugen. Es wäre auch möglich, dass anstelle von herkömmlicher Luft Sterilluft verwendet wird, oder sogar ein Sterilisationsgas, welches die Kunststoffvorformlinge nicht nur thermisch konditioniert sondern auch sterilisiert.

Durch das Erzeugen der Luftströmung wird die für die thermische Konditionierung benötigte Zeit verkürzt.

Bei einer weiteren vorteilhaften Ausführungsform weist die Vorrichtung eine Sensoreinrichtung zum Bestimmen einer Temperatur innerhalb des Temperierraums auf. Insbesondere bestimmt hier die Sensoreinrichtung eine Temperatur der in dem Temperierraum befindlichen Luft. Weiterhin kann eine Regeleinrichtung vorgesehen sein, welche auch eine Einstellung dieser Temperatur innerhalb des Temperierraums ermöglicht.

Bei einer weiteren vorteilhaften Ausführungsform weist die Vorrichtung nebeneinander verlaufende Transportbereiche auf. Auf diese Weise ist es möglich, die erfindungsgemäße Vorrichtung bzw. den Temperierraum vergleichsweise klein auszugestalten. Diese Transportbereiche können dabei seitlich nebeneinander und/oder höhenversetzt oder auch spiralförmig ausgebildet sein. So wäre es möglich, dass innerhalb des Temperierraums mehrere Transportbänder angeordnet sind und die Kunststoffvorformlinge von einem Transportband zum nächsten Transportband fallen bzw. in anderer Weise gelangen. Insbesondere erstreckt sich die Transporteinrichtung innerhalb des Temperierraums nicht entlang einer geraden Linie.

Bei einer weiteren vorteilhaften Ausführungsform weist die Transporteinrichtung ein Transportband auf, auf dem die Kunststoffvorformlinge durch den Temperierraum transportiert werden. Daneben können auch mehrere Transportbänder vorgesehen sein, beispielsweise übereinander angeordnete, insbesondere thermoisolierte Förderbänder, die geregelt mit Warmluft beaufschlagt werden. Dabei können diese Förderbänder derart ausgeführt werden, dass auch eine Beaufschlagung der Kunststoffvorformlinge von unten her mit warmer Luft möglich ist. Dabei ist es möglich, alle oder nur einzelne der Transporteinheiten der Transporteinrichtung mit einer oder auch mehreren Temperiereinrichtungen zu speisen. Dies kann beispielsweise in Abhängigkeit von einer Ausgangstemperatur der Kunststoffvorformlinge an der Zuführeinrichtung erfolgen.

Die vorliegende Erfindung ist weiterhin auf eine Anlage zum Behandeln von Kunststoffvorformlingen mit einer Vorrichtung der oben beschriebenen Art gerichtet, sowie einer dieser Vorrichtung in einer Transportrichtung der Kunststoffvorformlinge nach geordneten Vorrichtung zum Umformen der Kunststoffvorformlinge zu Kunststoffbehältnissen. Dabei ist zwischen der Vorrichtung zum Umformen der Kunststoffvorformlinge und der oben beschriebenen Vorrichtung zum Konditionieren eine erste Erwärmungseinrichtung zum Erwärmen der Kunststoffvorformlinge angeordnet.

Bei dieser Erwärmungseinrichtung kann es sich beispielsweise um einen Ofen handeln, der die Kunststoffvorformlinge auf eine Temperatur erwärmt, welche zum Umformen der Kunststoffvorformlinge geeignet ist. Demgegenüber ist vorzugsweise die Temperatur, die in der erfindungsgemäßen Vorrichtung zum Konditionieren erreicht wird, erheblich unterhalb dieser Temperatur das heißt einer Temperatur, die vorzugsweise im Bereich zwischen 30° und 70°, bevorzugt zwischen 40° und 60° und besonders bevorzugt zwischen 45° und 55° liegt. Bevorzugt liegt die Temperatur unterhalb des Glaspunktes des Materials des Kunststoffvorformlings und bevorzugt wenigstens 5° unterhalb des Glaspunktes. Auf diese Weise kann erreicht werden, dass die Kunststoffvorformlinge, selbst wenn sie nach Verlassen der Vorrichtung zum Konditionieren nicht im Anschluss zu Kunststoffbehältnissen umgeformt werden, wieder verwendet werden können

Bei einer vorteilhaften Ausführungsform weist die Vorrichtung eine Verbindungsleitung auf, welche erwärmte Luft von der Erwärmungseinrichtung und/oder der Vorrichtung zum Umformen der Kunststoffvorformlinge zu Kunststoffbehältnissen der erfindungsgemäßen Vorrichtung zu fördert. Dabei wird bei dieser Ausführungsform die erfindungsgemäße Vorrichtung vorteilhaft mit einer Abluft wenigstens einer der beiden vorgenannten Anlagen betrieben.

Bei einer weiteren vorteilhaften Ausführungsform weist die erfindungsgemäße Anlage eine Erzeugungseinrichtung zum Erzeugen der Kunststoffvorformlinge auf. Dabei kann es sich beispielsweise um eine Spritzgussmaschine handeln, welche aus einer Rohmasse die Kunststoffvorformlinge erzeugt. Vorteilhaft ist dabei diese Vorrichtung zum Erzeugen von Kunststoffvorformlingen unmittelbar vor der erfindungsgemäßen Vorrichtung angeordnet. Vorzugsweise ist die erfindungsgemäße Konditioniervorrichtung wahlweise von der Erzeugungseinrichtung oder von einem Reservoir mit Kunststoffvorformlingen beschickbar. Falls die Kunststoffvorformlinge ausgehend von einer Erzeugungseinrichtung zu der erfindungsgemäßen Vorrichtung gelangen, weisen sie üblicherweise eine höhere Temperatur auf, als sie in dem oben erwähnten Temperierraum herrscht. In diesem Fall dient die erfindungsgemäße Vorrichtung als Kühleinrichtung für die Kunststoffvorformlinge.

Es wäre weiterhin noch möglich, zwischen der erfindungsgemäßen Vorrichtung zum Konditionieren und der oben erwähnten Erwärmungseinrichtung eine weitere Heizeinrichtung vorzusehen, welche ebenfalls von den Kunststoffvorformlingen durchlaufen wird, und in welche die Kunststoffvorformlinge auf eine genaue einheitliche Temperatur temperiert werden.

Die vorliegende Erfindung ist weiterhin auf ein Verfahren gemäß Anspruch 10 gerichtet.

Vorzugsweise wird der Temperierraum von Luft durchströmt. Die Durchströmung kann dabei in der Transportrichtung der Kunststoffbehältnisse, entgegengesetzt hierzu, oder auch in anderen Richtungen erfolgen. Vorteilhaft werden die Kunststoffvorformlinge wenigstens abschnittsweise unsortiert durch den Temperierraum gefördert und besonders bevorzugt auf wenigstens einem Transportband.

Bei einer weiteren vorteilhaften Ausführungsform wird die Vorrichtung mit Abluft aus einer Heizeinrichtung, welche der Umformungseinrichtung vorgeschaltet ist und/oder Abluft der Umformungseinrichtung selbst beaufschlagt.

Vorteilhaft wird eine Position der Kunststoffvorformlinge bezüglich eines Luftstroms zum Temperieren wenigstens zeitweise verändert. Dies kann beispielsweise dadurch erfolgen, dass die Kunststoffvorformlinge von einer ersten Transporteinrichtung auf eine zweite Transporteinrichtung gelangen bzw. fallen oder auch dadurch, dass durch diese gezielt mit Wendeeinrichtungen und/oder Rütteleinrichtungen innerhalb der Vorrichtung zum Konditionieren gegenüber Ihrer Transporteinrichtung bewegt werden.

Vorteilhaft werden die Kunststoffvorformlinge in einer veränderlichen geometrischen Position zu einander gefördert. Bei einer weiteren vorteilhaften Ausführungsform werden die Kunststoffvorformlinge nach Verlassen der Vorrichtung zum Konditionieren noch einmal erwärmt. Bei einer weiteren vorteilhaften Ausführungsform werden die Kunststoffvorformlinge, bevor sie in die Vorrichtung zum Konditionieren gelangen, noch einmal erwärmt. Es wäre jedoch auch möglich, dass die Kunststoffvorformlinge direkt nach ihrer Fertigung oder Herstellung in die Vorrichtung zum Konditionieren gelangen.

Weitere vorteilhafte Ausführungsformen ergeben sich aus dem beigefügtem Zeichen:
- Fig. 1: Eine blockdiagrammartige Darstellung einer erfindungsgemäßen Anlage zum Behandeln von Behältnissen;
- Fig. 2: Eine schematische Darstellung einer erfindungsgemäßen Vorrichtung zum Konditionieren von Kunststoffvorformlingen;
- Fig. 3: Eine schematische Darstellung eines Führungssystems für Kunststoffvorformlinge;
- Fig. 4: Eine mögliche Verteilung für die Kunststoffvorformlinge innerhalb des Temperierraums;
- Fig. 5: Eine weitere Darstellung zur Durchführung der Kunststoffvorformlinge durch die Temperiervorrichtung;
- Fig. 6a - 6c: drei Diagramme zur Veranschaulichung eines Temperaturverlaufs der Kunststoffvorformlinge; und
- Fig. 7a - 7b: zwei Darstellungen zur Veranschaulichung der Lufttemperierung für eine erfindungsgemäße Vorrichtung;

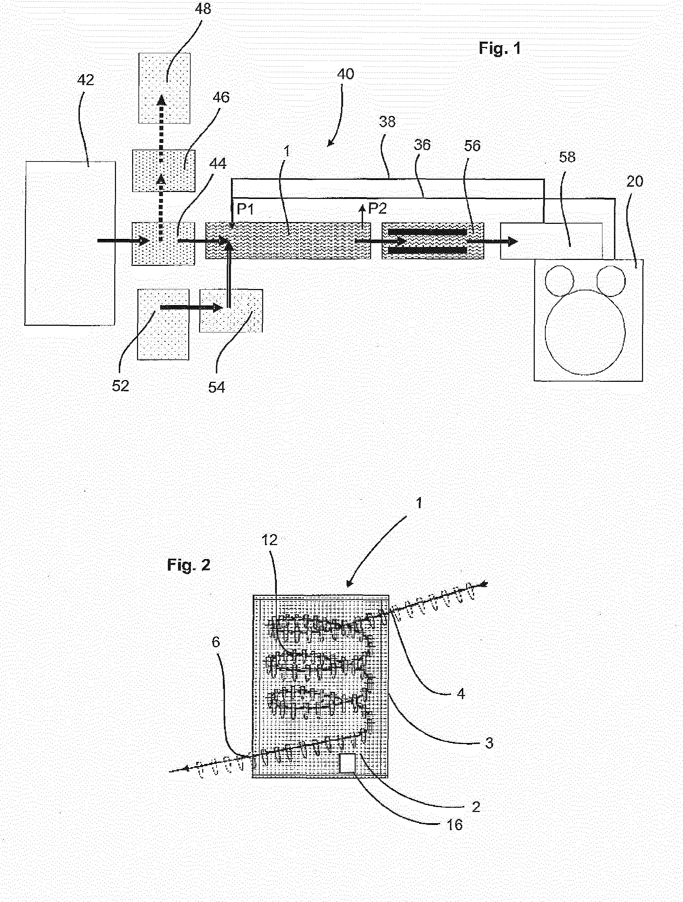

Figur 1 zeigt eine blockdiagrammartige Darstellung einer Anlage 40 zum Behandeln von Kunststoffbehältnissen. Dabei ist hier eine Spritzgussmaschine 42 vorgesehen, welche die Kunststoffvorformlinge erzeugt und zunächst an eine erste Kühleinrichtung 44 abgibt. Falls die hergestellten Kunststoffvorformlinge nicht unmittelbar weiterverarbeitet werden sollen, können sie über eine zweite Kühleinrichtung 46 an ein Magazin bzw. Kunststoffvorformlingslager 48 abgegeben werden. Falls die Kunststoffvorformlinge gleich im Anschluss zu Kunststoffbehältnissen geformt werden, werden sie zunächst an eine erfindungsgemäße Vorrichtung zum Konditionieren 1 übergeben bzw. durch diese Vorrichtung hindurch geführt.

Innerhalb der Vorrichtung 1 werden die Kunststoffvorformlinge mit erwärmter Luft beaufschlagt, die entlang des Pfeils P1 zugeführt und entlang des Pfeils P2 abgeführt wird. Es wäre jedoch auch eine Strömungsführung in umgekehrter Richtung denkbar, so dass die Luft aus dem Inneren der Vorrichtung 1 entgegen der Transportrichtung P der Kunststoffvorformlinge strömt. An die Vorrichtung 1 schließt sich eine temperierte Vereinzelungseinrichtung 56 an, in der die Kunststoffvorformlinge einerseits vereinzelt und andererseits auf ein gleiches Temperaturniveau gebracht werden. Im Anschluss daran werden die erwärmten Kunststoffvorformlinge einer Umformungseinrichtung 20 wie beispielsweise einer Streckblasmaschine zugeführt. Diese Streckblasmaschine weist dabei wiederum eine Heizeinrichtung 58 auf, in der die Kunststoffvorformlinge auf eine Temperatur gebracht werden, die für den Umformungsvorgang geeignet ist.

Alternativ wäre es auch denkbar, dass die Kunststoffvorformlinge aus einem Magazin bzw. einem Kunststofflager 52, ggfs. über eine Vorwärmeinheit 54 der erfindungsgemäßen Vorrichtung 1 zugeführt werden. Die erste Kühleinrichtung 44, d.h. die Nachkühlstation ist üblicherweise Bestandteil der Spritzgussmaschinen 42 und kühlt die Kunststoffvorformlinge auf eine Temperatur von circa 70° ab, so dass sie beim folgenden Transport nicht beschädigt oder deformiert werden.

In der erfindungsgemäßen Vorrichtung 1 bzw. im Temperierbereich liegen die Kunststoffvorformlinge unsortiert in der Art von Schüttgut auf einem Förderband oder einem ähnlichen Transportsystem und werden mit einem definierten Luftstrom (der wahlweise in oder gegen die Transportbewegung der Kunststoffvorformlinge gerichtet sein kann) gekühlt oder beheizt. Durch die lange Aufenthaltsdauer nähern sich die Temperaturen der Kunststoffvorformlinge asymptotisch an eine kontrollierte Umströmungslufttemperatur ein.

Das System kann dabei beispielsweise aus einem oder mehreren thermoisolierten Förderbändern bestehen, die geregelt mit Warmluft beaufschlagt werden. Das Bezugszeichen T kennzeichnet die Transportrichtung der Kunststoffvorformlinge 10.

Das Bezugszeichen 36 bezieht sich auf eine Leitung, mit welcher Abluft aus der Umformungseinrichtung 20 zu der Vorrichtung 1 geführt werden kann und das Bezugszeichen 38 auf eine Leitung, mit der Abluft aus der Heizeinrichtung 58 zu der Vorrichtung 1 geführt werden kann. Dabei wäre es auch möglich, dass die Leitungen 36 und 38 in eine gemeinsame Sammelleitung münden und eine Mischeinrichtung vorgesehen ist, welche durch die jeweiligen Mischverhältnisse die Temperatur der in die Vorrichtung 1 eintretenden Luft regelt.

Figur 2 zeigt eine mögliche Ausführungsform einer erfindungsgemäßen Konditioniervorrichtung 1. Dabei werden hier die Kunststoffvorformlinge entlang einer spiralförmigen Bahn von einer Zuführeinrichtung 4 durch einen Temperierraum 2 gefördert und über eine Abführeinrichtung 6 wieder aus dem Temperierraum 2 abgeführt. Das Bezugszeichen 12 bezieht sich auf eine Führungsschiene, entlang derer die Kunststoffvorformlinge auch unter der Wirkung der Schwerkraft durch den Temperierraum 2 gleiten. Dabei ist es auch möglich, dass die Transportstrecke innerhalb des Temperierraums 2 als Staustrecke ausgebildet ist, so dass der Temperierraum 2 bzw. die Vorrichtung 1 auch als Puffer dienen kann.

Daneben wäre es auch möglich, die oben ausgeführte Temperierstrecke aus mehreren übereinander oder nebeneinander liegenden Transporteinheiten zu gestalten, welche miteinander verbunden sind. Dabei werden vorzugsweise alle oder nur einzelne Teilstücke von einer Temperiereinheit gespeist. Die in Figur 2 gezeigte Vorrichtung kann jedoch auch als Steigförderer wirken.

Dabei ist es vorteilhaft, das System möglichst kompakt zu bauen und zusätzlich auch die Außenflächen 3 zu isolieren um den Energiebedarf minimal zu halten. Vorzugsweise wird im Inneren des Temperierraums 2 die kontrolliert temperierte Luft im Kreis geführt oder über einen unten im Detail beschriebenen Umluftwärmetauscher oder einen Umluftbeimischer wieder in den Vorlaufstrang zurückgeführt um möglichst wenig Energie an die Umgebung zu verlieren.

Dabei wäre es möglich, dass der Temperierraum 2 mit Abwärme des Ofens, einer Mikrowellenheizung, eines Kompressors, eines Kompressionskühlers oder dergleichen gespeist wird. Das Bezugszeichen 16 kennzeichnet grob schematisch eine Sensoreinrichtung, welche eine Temperatur innerhalb des Temperierraums 2, genauer, eine Temperatur der Luft in dem Temperierraum 2 erfasst. Es wäre auch möglich, dass mehrere derartige Sensoreinrichtungen 16 vorgesehen sind. Daneben kann auch eine Steuerungs- bzw. Regelungseinrichtung vorgesehen sein (nicht gezeigt) die in Reaktion auf gemessene Temperaturen eine Steuerung bzw. Regelung der Temperatur innerhalb des Temperierraums 2 vornimmt.

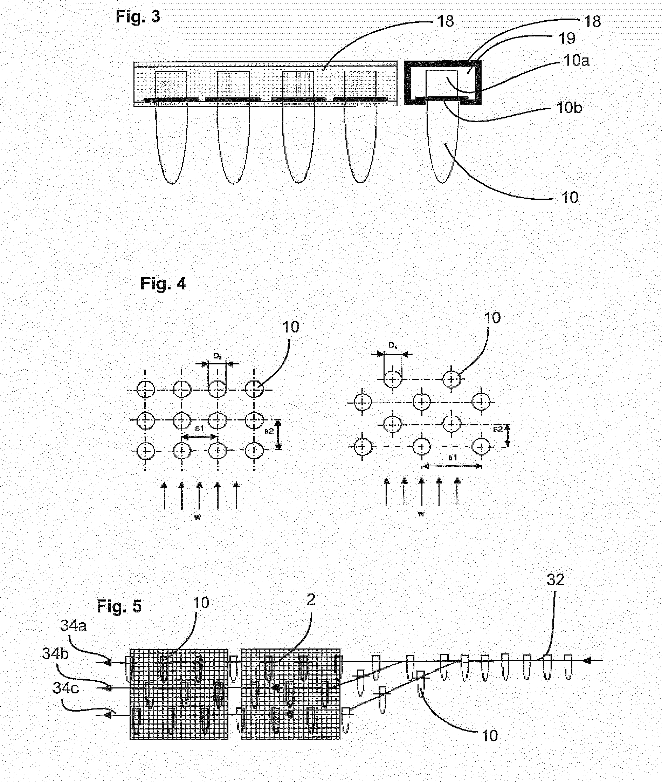

Figur 3 zeigt eine Darstellung zur Veranschaulichung des Transports der Vorformlinge. Bei dieser Ausführungsform werden die Kunststoffvorformlinge in einer Führungsschiene 18 unterhalb ihres Tragrings 10b gegriffen und auf diese Weise transportiert. Daneben wäre es auch möglich, den Bereich 19 mit kühlerer Luft zu beaufschlagen um so ein Gewinde 10a der Kunststoffvorformlinge weiter zu schonen.

Figur 4 zeigt zwei mögliche Gestaltungen für den Transport bzw. die strukturierte Anordnung der Kunststoffvorformlinge 10 innerhalb des Temperierraums. Die Pfeile w beziehen sich dabei auf die Zufuhr von erwärmter Luft. Bei der linken Gestaltung sind die Kunststoffvorformlinge fluchtend zueinander angeordnet und bei der rechten Gestaltung hintereinander versetzt.

Figur 5 zeigt eine weitere Ausgestaltung einer erfindungsgemäßen Vorrichtung. Hier werden die Kunststoffvorformlinge von einer Bahn 32 beispielsweise auf drei Bahnen 34a, 34b und 34c oder mehrere und auf diesen drei Bahnen durch den Temperierraum 2 gefördert.

Es ist möglich, dass die Kunststoffvorformlinge vereinzelt zugeführt werden, es kann jedoch auch eine konventionelle Zuführung verwendet werden, die eingehaust ist und auf Solltemperatur der Kunststoffvorformlinge gehalten wird. Bei dieser Gestaltung soll der Kunststoffvorformling nicht mehr beheizt oder gekühlt werden, sondern nur seine Temperatur halten.

Die in Figur 1 gezeigte Umformungseinrichtung 20 kann, wie oben erwähnt, im Vergleich zum Stand der Technik mit einem kleineren Profilierofen auskommen, da deutlich weniger Energie zum Erwärmen der Kunststoffvorformlinge verwendet wird.

Die zweite Kühleinrichtung 46 (Fig. 1) kann auch dafür verwendet werden, um die Kunststoffvorformlinge im Falle einer längeren Störung an der Blasmaschine oder in dem Fall, dass an der Spritzgussmaschine 42 andere Kunststoffvorformlinge produziert werden als sie an der Umformungseinrichtung 20 benötigt werden, auf eine ausreichend geringe Temperatur zu kühlen, so dass die Kunststoffvorformlinge ohne Probleme in das Lager 48 weitergegeben werden können. In dem Lager 48 können die Kunststoffvorformlinge in Kisten oder ähnliches verpackt werden, es wären jedoch auch sog. Preformsilos denkbar.

Die Fördereinrichtung 54 dient insbesondere für den Fall eines Ausfalls der Spritzgussmaschine 42 oder für den Fall, dass auf der Umformungseinrichtung andere Kunststoffvorformlinge verarbeitet werden als sie gerade auf der Spritzgussmaschine 42 produziert werden. In diesem Fall können die Kunststoffvorformlinge, falls nötig, aus einem Kunststoffvorformlingslager 52 genommen und vorgewärmt werden. Weiterhin wäre es auch möglich, dass die Vorwärmeinheit 54 in der erfindungsgemäßen Vorrichtung 1 integriert ist.

Aus dem Lager 52 können auch kalte Kunststoffvorformlinge aus Oktabins oder ähnlichem, wenn nötig, zugeführt werden.

Im Falle einer Störung bleibt die Fördereinrichtung 12 in dem Temperierraum 2 stehen. Dadurch, dass die Kunststoffvorformlinge in dem Temperierraum 2 asymptotisch an die Umgebungstemperatur herangeführt werden, können sie sich nicht überhitzen sondern maximal die Temperatur der hier umgebenden kontrolliert temperierten Luft annehmen.

Weiterhin besteht die Möglichkeit, die Kunststoffvorformlinge in dem Temperierraum 2 und oder in der Zuführung strukturiert in Figur 4 gezeigt auf einer Transporteinrichtung anzuordnen. Der in Fig. 4 gezeigte Abstand s1 der Kunststoffvorformlinge ist dabei vorteilhaft so gering wie möglich zu halten und der Abstand s2 beispielsweise auf Längen im Bereich zwischen 30 und 60mm, bevorzugt zwischen 40 und 50mm, besonders bevorzugt im Bereich von 44mm einzustellen. Die Abweichung von der Solltemperatur und die Verweildauer und somit der Gesamtenergieverbrauch können so verringert werden. Weiterhin wäre es denkbar, bei einer strukturierten Anordnung die Mundstücke, wie in Figur 3 gezeigt, abzuschotten um unnötigen Wärmeeintrag zu verhindern.

Auch wäre es denkbar, dass im Temperierraum 2 eine Temperierung nur dazu dient, um die Ausgangsbedingungen normaler Kunststoffvorformlinge beispielsweise 0 Grad vom Hof im Winter und 40 Grad neben dem Ofen auszugleichen und auf eine konstante Ausgangstemperatur 45 Grad zu bringen.

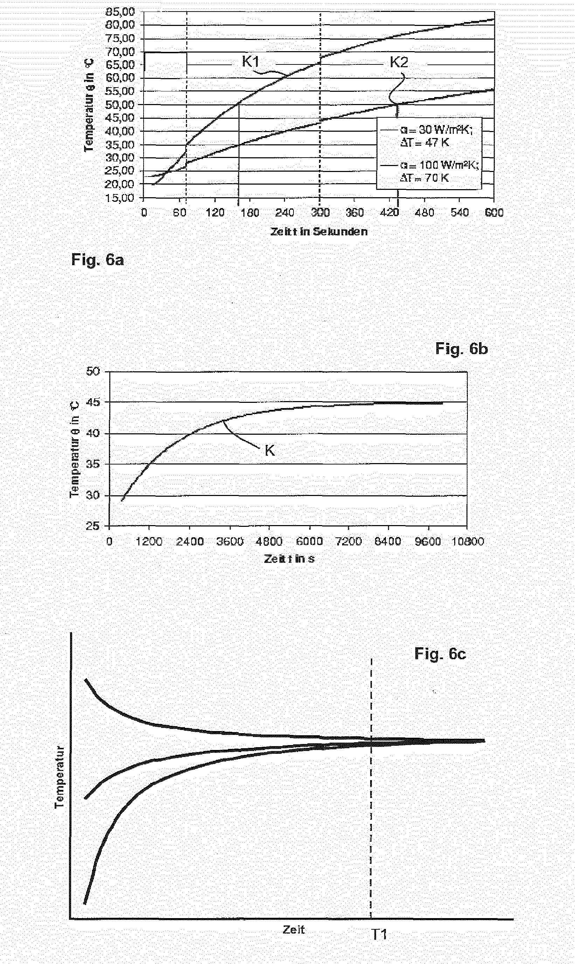

Die Figuren 6a bis 6c zeigen mögliche Temperaturverläufe des Kunststoffvorformlings mit einer Wanddicke von 4mm über die Dauer der Erwärmung der Außenwand. Figur 6a zeigt ein Beispiel für erzwungene Konvektion. Man erkennt, dass ein Temperaturunterschied von 70 K (Kurve K1) bzw. ein Temperaturanstieg von 20 °C auf 90 °C in einem zeitlichen Rahmen von ca. 10 Minuten im Wesentlichen erreicht ist. Falls, wie durch die Kurve K2 veranschaulicht, ein Temperaturunterschied von 47 K erreicht werden soll, ist dies auch in einem zeitlichen Bereich von ca. 10 Minuten möglich. Figur 6b veranschaulicht den gleichen Vorgang bei freier Konvektion. Man erkennt, dass hier wesentlich längere Zeitspannen nötig sind, um eine Erwärmung auf die Umgebungstemperatur von 45° C zu erreichen. Wie sich aus der Kurve K ergibt, wird eine Temperatur im Bereich von 45 °C erst nach ca. 3h erreicht.

Figur 6c zeigt drei mögliche Temperaturverläufe, wobei man erkennt, dass im Wesentlichen unabhängig von der Ausgangstemperatur sich zu einem bestimmten Zeitpunkt T1 die Temperaturen der Kunststoffvorformlinge sehr stark aneinander angenähert haben wobei die noch bestehenden Schwankungen auch für die weiterführenden Prozesse hingenommen werden können.

Es wäre auch möglich, dass die erfindungsgemäße Vorrichtung lediglich eingesetzt wird, um die Gesamtenergiebilanz einer Streckblasanlage zu verbessern. In diesem Fall kann die Spritzgussanlage komplett entfallen und man arbeitet stattdessen mit der oben beschriebenen "Preformlager - Zuführung" mit an anderer Stelle gespritzten Kunststoffvorformlingen auf Raumtemperaturniveau. Zwar wird dabei keine Restwärme aus dem vorhergehenden Prozess genutzt aber die Erwärmung der Temperierstrecke ist mit Wesentlich weniger Aufwand und auch mit weniger Energieeinsatz möglich, da mehr Zeit zur Einbringung der Energie zur Verfügung steht. Der konvektive Wärmeeintrag über warme Luft und Wärmeleitung ist im Wirkungsgrad wesentlich besser als die Einbringung von Energie mittels Infrarotstrahlen auf kurzer Strecke. Auf diese Weise bessert sich der Gesamtwirkungsgrad der Anlage und die ineffizientere Infrarotheizstrecke kann gegenüber einer Standard Streckblasanlage verkürzt werden.

Die Abweichung der Solltemperatur wird nach Temperierung in der Vorwärmstrecke durch Temperierung und Isolierung der Vereinzelung und Zuführschiene zur Blaseinrichtung auf ein Minimum gesenkt. Durch strukturierte Anordnung der Kunststoffvorformlinge in der Zuführung zu der Blaseinrichtung wird die Temperaturverteilung in und zwischen den Kunststoffvorformlingen nachträglich homogenisiert.

Zur weiteren Verringerung der Abweichung der Solltemperatur ist es hilfreich, die Kunststoffvorformlinge während des Transportes durch die Temperierstrecke permanent oder in diversen zeitlichen Abständen zu vermischen um die Lage der Einzelkunststoffvorformlinge im Heißluftstrom zu verändern. Dies kann beispielsweise über ein Rührwerk erfolgen oder auch über eine Rüttelvorrichtung oder auch eine Umschichtung beim Transport zwischen mehreren Förderbändern.

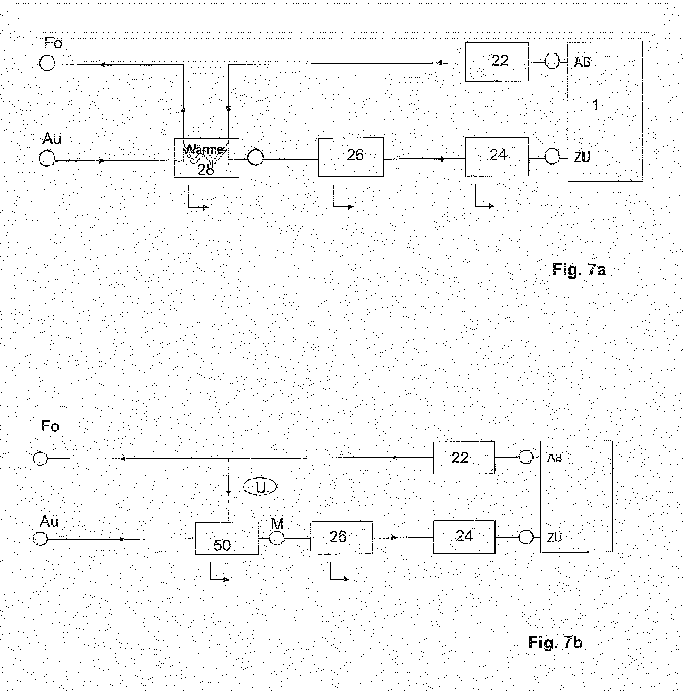

Die Figuren 7a und 7b zeigen zwei Darstellungen zur Veranschaulichung der Wärmerückgewinnung. Dabei ist es beispielsweise möglich, Außenluft AU einem Wärmetauscher 28 zuzuführen, wobei dieser Wärmetauscher 28 auch in den Wärmekreislauf mit der erfindungsgemäßen Vorrichtung 1 integriert ist. Das Bezugszeichen 22 kennzeichnet eine Gebläseeinheit die ebenso wie eine weitere Gebläseeinheit 24 der Vorrichtung 1 bzw. dem Temperierraum 2 erwärmte Luft zuführt und diese auch wieder abführt. Zusätzlich kann ein Vorerhitzer 26 zum Erwärmen der der Vorrichtung 1 zugeführten Luft vorgesehen sein. Bei diesem Vorerhitzer 26 kann es sich auch um einen Wasser - Luft - Wärmetauscher handeln und bei den Gebläseeinheiten 22, 24 auch um Axialventilatoren. Durch eine Rückgewinnung des Wärmeinhalts der Abluft AB ist es möglich, eine wesentliche Verringerung des Energieverbrauchs zu erzielen. Diese Abluft AB wird dabei dem oben erwähnten Wärmetauscher 28 zugeführt. Das Bezugszeichen ZU bezieht sich auf die Zuluft.

Damit erfolgt bei der in der Figur 7a gezeigten Variante eine Wärmerückgewinnung über den Umluftwärmetauscher 28.

Figur 7b zeigt eine weitere Variante, wobei hier die Wärmerückgewinnung über eine Umluftbeimischung erfolgt. Zu diesem Zweck ist an Stelle des Wärmetausches 28 eine Mischeinheit 50 vorgesehen. In der Mischkammer dieser Mischeinheit wird der Außenluft ein gewisser Anteil an Fortluft FO beigemischt, um dadurch den Energieverbrauch des Nacherhitzers zu senken, um auf diese Weise Energie einzusparen. Das Bezugszeichen U bezieht sich hier auf Umluft und das Bezugszeichen M auf Mischluft.

Während bei den in den Figuren 7a und 7b gezeigten Vorgehensweisen die Vorheizleistung bei 69 bzw. 67 KW liegt, werden ohne diese Wärmerückgewinnung 102kW an Vorheizleistung benötigt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Temperierraum
- 3: Außenfläche
- 4: Zuführeinrichtung
- 6: Abführeinrichtung
- 10: Kunststoffvorformling
- 10a: Gewinde
- 10b: Tragring
- 12: Transporteinrichtung
- 16: Sensoreinrichtung
- 18: Führungsschiene
- 19: Bereich
- 20: Umformungseinrichtung
- 22, 24: Gebläseeinheiten
- 26: Vorerhitzer
- 28: Wärmetauscher
- 32: Bahn
- 34a, 34b, 34c: Bahnen
- 36: Leitung zur Abluftzuführung aus der Umformungseinrichtung
- 38: Leitung zur Abluftzuführung aus der Heizeinrichtung
- 40: Anlage
- 42: Spritzgussmaschine
- 44: erste Kühleinrichtung
- 46: zweite Kühleinrichtung
- 48: Kunststoffvorformlingslager
- 50: Mischeinheit
- 52: Kunststoffvorformlingslager
- 54: Vorwärmeinheit
- 56: Vereinzelungseinrichtung
- 58: Heizeinrichtung
- K, K1, K2: Kurven
- T1: Temperatur
- AB: Abluft
- ZU: Zuluft
- FO: Fortluft
- U: Umluft
- M: Mischluft
- T: Transportrichtung
- P1, P2: Pfeile
- w: Luftströmung
- s1, s2: Abstand

## Patentansprüche

1. Vorrichtung (1) zum Konditionieren von Kunststoffvorformlingen (10) mit einem Temperierraum (2) zur Aufnahme einer Vielzahl von Kunststoffvorformlingen (10), mit einer Zuführeinrichtung (4), um dem Temperierraum (2) die Kunststoffvorformlinge (10) zuzuführen, mit einer Abführeinrichtung (6), um die Kunststoffvorformlinge (10) aus dem Temperierraum (2) abzuführen und mit einer Transporteinrichtung (12), welche die Kunststoffvorformlinge (10) von der Zuführeinrichtung (4) zu der Abführeinrichtung (6) derart transportiert, dass jeder Kunststoffvorformling während einer vorgegebenen Verweildauer in dem Temperierraum (2) verbleibt, wobei eine Temperatur der mit der Abführeinrichtung (6) abführbaren Kunststoffvorformlinge (10) unabhängig von einer Verweildauer der Kunststoffvorformlinge (10) in dem Temperierraum (2) im Wesentlichen konstant ist und die Transporteinrichtung (12) hinsichtlich ihrer Abmessung und Fördergeschwindigkeit derart ausgestaltet ist, dass jeder Kunststoffvorformling (10) während einer Zeitspanne von wenigstens 5 Minuten in dem Temperierraum (2) verbleibbar ist,
**dadurch gekennzeichnet, dass**
die Kunststoffvorformlinge (10) wenigstens abschnittsweise unsortiert mittels der Transporteinrichtung (12) durch den Temperierraum (2) transportierbar sind, wobei hierunter Verstanden wird, dass die Kunststoffvorformlinge (10) in einer losen Schüttung durch den Temperierraum (2) gefördert werden und die Längsrichtungen der unsortiert transportierten Kunststoffvorformlinge (10) in mehr als einer Richtung ausgerichtet sind und mit einem definierten Luftstrom gekühlt oder beheizt werden.

2. Vorrichtung (1) nach Anspruch 1,
**dadurch gekennzeichnet, dass**
die Temperatur der aus der Abführeinrichtung (6) austretenden Kunststoffvorformlinge (10) unabhängig von einer Temperatur der über die Zuführeinrichtung (4) dem Temperierraum (2) zugeführten Kunststoffvorformlinge (10) ist.

3. Vorrichtung (1) nach wenigstens einem der vorangegangenen Ansprüche,
**dadurch gekennzeichnet, dass**
die Vorrichtung (1) eine Strömungserzeugungseinrichrtung (22,24) aufweist, welche in dem Temperierraum (2) eine Luftströmung erzeugt, mit dem die Kunststoffvorformlinge (10) beaufschlagbar sind.

4. Vorrichtung (1) nach wenigstens einem der vorangegangenen Ansprüche,
**dadurch gekennzeichnet, dass**
die Vorrichtung (1) eine Sensoreinrichtung (16) zum Bestimmen einer Temperatur innerhalb des Temperierraums (2) aufweist.

5. Vorrichtung (1) nach wenigstens einem der vorangegangenen Ansprüche,
**dadurch gekennzeichnet, dass**
die Transporteinrichtung (12) nebeneinander verlaufende Transportbereiche (34a, 34b, 34c) aufweist.

6. Vorrichtung (1) nach wenigstens einem der vorangegangenen Ansprüche,
**dadurch gekennzeichnet, dass**
die Transporteinrichtung (12) ein Transportband aufweist, auf dem die Kunststoffvorformlinge (10) durch den Temperierraum (2) transportiert werden.

7. Anlage (40) zum Behandeln von Kunststoffvorformlingen (10) mit einer Vorrichtung (1) nach wenigstens einem der vorangegangenen Ansprüche und einer dieser Vorrichtung (1) in einer Transportrichtung der Kunststoffvorformlinge nachgeordneten Vorrichtung (20) zum Umformen der Kunststoffvorformlinge zu Kunststoffbehältnissen, wobei zwischen der Vorrichtung (20) zum Umformen der Kunststoffvorformlinge (10) und der Vorrichtung (1) eine erste Erwärmungseinrichtung (58) zum Erwärmen der Kunststoffvorformlinge (10) angeordnet ist.

8. Anlage (40) nach wenigstens einem der vorangegangenen Ansprüche,
**dadurch gekennzeichnet, dass**
die Vorrichtung eine Verbindungsleitung (36, 38) aufweist, welche erwärmte Luft von der Erwärmungseinrichtung (58) und/oder der Vorrichtung (20) zum Umformen der Kunststoffvorformlinge (10) zu Kunststoffbehältnissen zu der Vorrichtung (1) fördert.

9. Anlage (40) nach wenigstens einem der vorangegangenen Ansprüche,
**dadurch gekennzeichnet, dass**
die Anlage eine Erzeugungseinrichtung (42) zum Erzeugen der Kunststoffvorformlinge (10) aufweist.

10. Verfahren zum Herstellen von Kunststoffbehältnissen, wobei Kunststoffvorformlinge (10) erwärmt und anschließend in einer Umformungseinrichtung (20) zu Kunststoffbehältnissen umgeformt werden, wobei die Kunststoffvorformlinge (10) vor der Erwärmung in einer Vorrichtung (1) zum Konditionieren thermisch konditioniert werden, und die Kunststoffvorformlinge (10) hierzu durch einen Temperierraum (2) dieser Vorrichtung (1) zum Konditionieren transportiert werden, die Kunststoffvorformlinge (10) während eines Zeitraums von wenigstens 5 Minuten in dem Temperierraum (2) angeordnet sind,
**dadurch gekennzeichnet, dass**
die Kunststoffvorformlinge (10) wenigstens abschnittsweise unsortiert durch den Temperierraum (2) gefördert werden, wobei hierunter verstanden wird, dass die Kunststoffvorformlinge (10) in einer losen Schüttung durch den Temperierraum (2) gefördert werden und die Längsrichtungen der unsortiert transportierten Kunststoffvorformlinge (10) in mehr als einer Richtung ausgerichtet sind und mit einem definierten Luftstrom gekühlt oder beheizt werden.

11. Verfahren nach Anspruch 10,
**dadurch gekennzeichnet, dass**
der Temperierraum (2) von Luft durchströmt wird.

12. Verfahren nach wenigstens einem der vorangegangenen Ansprüche,
**dadurch gekennzeichnet, dass**
die Vorrichtung (1) mit Abluft aus einer Heizeinrichtung (58) und/oder der Umformungseinrichtung (20) beaufschlagt wird.

## Claims

1. An apparatus (1) for the conditioning of plastics material pre-forms (10) with a tempering space (2) for receiving a plurality of plastics material pre-forms (10), with a supply device (4) in order to supply the plastics material pre-forms (10) to the tempering space (2), with a removal device (6) in order to remove the plastics material pre-forms (10) out of the tempering space (2), and with a conveying device (12) which conveys the plastics material pre-forms (10) from the supply device (4) to the removal device (6) in such a way that each plastics material pre-form remains in the tempering space (2) for a pre-set duration of the dwell period, wherein a temperature of the plastics material pre-forms (10) being removable by the removal device (6) is substantially constant irrespective of a duration of the dwell period of the plastics material pre-forms (10) in the tempering space (2) and the conveying device (12) is with regard to its dimensions and transport speed designed in such a way that each plastics material pre-form (10) can remain in the tempering space (2) for a period of time of at least 5 minutes,
**characterised in that**
the conveying device (12) conveys the plastics material pre-forms (10) non-sorted at least in sections through the tempering space (2), wherein this is understood to mean that the plastics material preforms (10) are conveyed in loose bulk through the tempering space (2) and the longitudinal direction of the plastics material preforms (10) conveyed in a non-sorted manner, is aligned in more than only one directions and are cooled or heated with a defined air flow.

2. An apparatus (1) according to claim 1,
**characterised in that**
the temperature of the plastics material pre-forms (10) leaving the removal device (6) is independent of a temperature of the plastics material pre-forms (10) supplied to the tempering space (2) by way of the supply device (4).

3. An apparatus (1) according to at least one of the preceding claims,
**characterised in that**
the apparatus (1) has a flow generation device (22, 24) which in the tempering space (2) generates an air flow with which it is possible to act upon the plastics material pre-forms (10).

4. An apparatus (1) according to at least one of the preceding claims,
**characterised in that**
the apparatus (1) has a sensor device (16) for determining a temperature inside the tempering space (2).

5. An apparatus (1) according to at least one of the preceding claims,
**characterised in that**
the conveying device (12) has conveying regions (34a, 34b, 34c) extending adjacent to one another.

6. An apparatus (1) according to at least one of the preceding claims,
**characterised in that**
the conveying device (12) has a conveyor belt on which the plastics material pre-forms (10) are conveyed through the tempering space (2).

7. A plant (40) for the treatment of plastics material pre-forms (10) with an apparatus (1) according to at least one of the preceding claims and an apparatus (20) - arranged downstream of this apparatus (1) in a conveying direction of the plastics material pre-forms - for shaping the plastics material pre-forms to form plastics material containers, wherein a first heating device (58) for heating the plastics material pre-forms (10) is arranged between the apparatus (20) for shaping the plastics material pre-forms (10) and the apparatus (1).

8. A plant (40) according to at least one of the preceding claims,
**characterised in that**
the apparatus has a connecting line (36, 38) which conveys heated air from the heating device (58) and/or the apparatus (20) for shaping the plastics material pre-forms (10) to form plastics material containers to the apparatus (1).

9. A plant (40) according to at least one of the preceding claims,
**characterised in that**
the plant has a production device (42) for producing the plastics material pre-forms (10).

10. A method of producing plastics material containers, wherein plastics material pre-forms (10) are heated and are then shaped in a shaping device (20) to form plastics material containers, wherein the plastics material pre-forms (10) are conditioned thermally in an apparatus (1) for the conditioning before the heating, and to this end the plastics material pre-forms (10) are conveyed through a tempering space (2) of this apparatus (1) for the conditioning, wherein the plastics material pre-forms (10) are present in the tempering space (2) for a period of at least 5 minutes,
**characterised in that**
the plastics material pre-forms (10) are conveyed non-sorted at least in sections through the tempering space (2), wherein this is understood to mean that the plastics material preforms (10) are conveyed in loose bulk through the tempering space (2) and the longitudinal direction of the plastics material preforms (10) conveyed in a non-sorted manner, is aligned in more than only one directions and are cooled or heated with a defined air flow.

11. A method according to claim 10,
**characterised in that**
the tempering space (2) has air flow through it.

12. A method according to at least one of the preceding claims,
**characterised in that**
the apparatus (1) is acted upon with waste air from a heating device (58) and/or from the shaping device (20).

## Revendications

1. Dispositif (1) pour conditionner des préformes en matière plastique (10) avec une chambre de thermorégulation (2) destinée à loger une pluralité de préformes en matière plastique (10), avec un dispositif d'amenée (4), afin d'amener les préformes en matière plastique (10) à la chambre de thermorégulation (2), avec un dispositif d'évacuation (6), afin d'évacuer les préformes en matière plastique (10) de la chambre de thermorégulation (2) et avec un dispositif de transport (12), lequel transporte les préformes en matière plastique (10) du dispositif d'amenée (4) au dispositif d'évacuation (6), de telle sorte que chaque préforme en matière plastique reste dans la chambre de thermorégulation (2) pendant une durée de séjour prédéfinie, dans lequel une température des préformes en matière plastique (10) pouvant être évacuées avec le dispositif d'évacuation (6) est sensiblement constante indépendamment d'une durée de séjour des préformes en matière plastique (10) dans la chambre de thermorégulation (2) et le dispositif de transport (12), en ce qui concerne sa dimension et vitesse de transport, est conçu de telle sorte que chaque préforme en matière plastique (10) peut rester dans la chambre de thermorégulation (2) pendant un laps de temps d'au moins 5 minutes,
**caractérisé en ce que**
les préformes en matière plastique (10) peuvent être transportées au moins en partie non triées à travers la chambre de thermorégulation (2) au moyen du dispositif de transport (12), dans lequel on entend par ceci que les préformes en matière plastique (10) sont transportées en vrac à travers la chambre de thermorégulation (2) et les directions longitudinales des préformes en matière plastique (10) transportées non triées sont orientées dans plus d'une direction et refroidies ou chauffées avec un courant d'air défini.

2. Dispositif (1) selon la revendication 1,
**caractérisé en ce que**
la température des préformes en matière plastique (10) sortant du dispositif d'évacuation (6) est indépendante d'une température des préformes en matière plastique (10) amenées à la chambre de thermorégulation (2) par l'intermédiaire du dispositif d'amenée (4).

3. Dispositif (1) selon au moins l'une des revendications précédentes,
**caractérisé en ce que**
le dispositif (1) présente un dispositif de production d'écoulement (22, 24), lequel produit dans la chambre de thermorégulation (2) un écoulement d'air à l'effet duquel les préformes en matière plastique (10) peuvent être soumises.

4. Dispositif (1) selon au moins l'une des revendications précédentes,
**caractérisé en ce que**
le dispositif (1) présente un dispositif de détection (16) destiné à déterminer une température à l'intérieur de la chambre de thermorégulation (2).

5. Dispositif (1) selon au moins l'une des revendications précédentes,
**caractérisé en ce que**
le dispositif de transport (12) présente des zones de transport (34a, 34b, 34c) s'étendant les unes à côté des autres.

6. Dispositif (1) selon au moins l'une des revendications précédentes,
**caractérisé en ce que**
le dispositif de transport (12) présente une bande de transport sur laquelle les préformes en matière plastique (10) sont transportées à travers la chambre de thermorégulation (2).

7. Installation (40) de traitement de préformes en matière plastique (10) avec un dispositif (1) selon au moins l'une des revendications précédentes et un dispositif (20) situé en aval de ce dispositif (1) dans une direction de transport des préformes en matière plastique et destiné à transformer les préformes en matière plastique en contenants en matière plastique, dans laquelle un premier dispositif de chauffage (58) destiné à chauffer les préformes en matière plastique (10) est disposé entre le dispositif (20) destiné à transformer les préformes en matière plastique (10) et le dispositif (1).

8. Installation (40) selon au moins l'une des revendications précédentes,
**caractérisée en ce que**
le dispositif présente une conduite de liaison (36, 38), laquelle transporte l'air chauffé par le dispositif de chauffage (58) et/ou le dispositif (20) destiné à transformer les préformes en matière plastique (10) en contenants en matière plastique vers le dispositif (1).

9. Installation (40) selon au moins l'une des revendications précédentes,
**caractérisée en ce que**
l'installation présente un dispositif de production (42) destiné à produire les préformes en matière plastique (10).

10. Procédé de fabrication de contenants en matière plastique, dans lequel des préformes en matière plastique (10) sont chauffées et ensuite transformées dans un dispositif de façonnage (20) en contenants en matière plastique, dans lequel les préformes en matière plastique (10), avant d'être chauffées, sont conditionnées thermiquement dans un dispositif (1) de conditionnement, et les préformes en matière plastique (10) sont transportées à cet effet à travers une chambre de thermorégulation (2) de ce dispositif (1) de conditionnement, les préformes en matière plastique (10) sont disposées dans la chambre de thermorégulation (2) pendant un laps de temps d'au moins 5 minutes,
**caractérisé en ce que**
les préformes en matière plastique (10) sont transportées au moins en partie non triées à travers la chambre de thermorégulation (2), dans lequel on entend par ceci que les préformes en matière plastique (10) sont transportées en vrac à travers la chambre de thermorégulation (2) et les directions longitudinales des préformes en matière plastique (10) transportées non triées sont orientées dans plus d'une direction, et sont refroidies ou chauffées avec un courant d'air défini.

11. Procédé selon la revendication 10,
**caractérisé en ce que**
la chambre de thermorégulation (2) est traversée par l'air.

12. Procédé selon au moins l'une des revendications précédentes,
**caractérisé en ce que**
le dispositif (1) est soumis à l'effet de l'air évacué d'un dispositif de chauffage (58) et/ou du dispositif de formage (20).
